# EUROPEAN PATENT SPECIFICATION

(11) **EP 0 322 404 B1**
(45) Date of publication and mention of the grant of the patent: **13.07.1994**
(21) Application number: 89103332.6
(22) Date of filing: 22.01.1986
(51) Int. Cl.: A01J 7/00, A01K 1/12

(54) **A device for milking animals, such as cows**
Gerät zum Melken von Tieren, wie z.B. Kühen
Dispositif de traite d'animaux, par exemple de vaches

(30) Priority: 28.01.1985 NL 8500224; 28.01.1985 NL 8500222; 28.01.1985 NL 8500223
(43) Date of publication of application: 28.06.1989
(62) Divisional of application: 86200099.9
(73) Proprietor: Maasland N.V., 3155 ZG Maasland (NL)
(72) Inventor: Van der Lely, Cornelis, CH-Zug (CH)
(74) Representative: Mulder, Herman

(56) References cited:
- EP-A- 0 091 892
- US-A- 3 763 828
- US-A- 4 010 714
- DE TELEGRAAF 04 December 1984, page T23 E.BOS: "LAND- EN TUINBOUW"
- LANDTECHNIK. vol. 35, no. 5, May 1980, HANNOVER DE pages 222 - 224; D.ORDOLFF:
- "MELKZEUGE AUTOMATISCH ANSETZEN - DEMNÄCHST WIRKLICHKEIT ?"

## Description

The invention relates to a device for milking animals, such as cows, comprising a milking parlour, a milking machine with a milking cluster and with a support therefore, which support is capable of lateral movement, positioning means to position an animal in the longitudinal direction in the milking parlour and sensor means for determining the position of an animal in the lateral direction in the milking parlour.

Generally, the milking parlour is a space where the animal can be positioned during milking and where the necessary hygiene must be observed. Milking is effected by means of a milking machine having a milking cluster, whose teat cups can be attached to the teats of the udder. The supplied milk can be conveyed to a storage container.

A milking device as described in the opening paragraph is known from EP-A-0 091 892. For retaining the animal the milking parlour therein is closable by means of gates or screens which are adapted to bring the cow to take a more or less defined position. Nevertheless, the animal in the milking parlour has a limited movability; the position of the animal is only roughly determined. Therefore the attachment of the teat cups of the milking cluster will not always be efficient and reliable without additional measures, viz. electronic sensor means.

The invention has for its object to provide a device for milking animals, such as cows, in which an animal can be positioned in such a way that the milking cluster can be attached to the teats of the animal in an efficient and reliable manner.

To that end, the device according to the invention is characterized in that the sensor means are disposed on each side of the milking parlour and are arranged to determine said lateral position in contact with an animal in the milking parlour, said sensor means further being coupled to the support in such a manner that they maintain the milking cluster central to parts of the sensor means arranged robe in contact with an animal in the milking parlour. Thus, the milking cluster can be coupled to the udder in an efficient manner, in that the milking cluster is always kept in the appropriate position under the animal by means of its support.

In the milking device described in US-A-4 010 714 a support for a milking cluster is movable over rails and can be brought laterally under the animal. After the support is brought under the animal during milking there is no movability in the lateral direction. The animal is hold in a predetermined position by means of supporting elements; there is no coupling of such supporting elements with a laterally movable support for the milking cluster, which only requires an accurate positioning in the longitudinal direction.

In a specific embodiment the sensor means and the milking cluster may be connected, capable of swivelling, by means of a parallelogram construction, which preferably extends in a horizontal plane, so that moving the milking cluster in a substantially horizontal plane is possible. The parallelogram construction may be located under the milking parlour floor.

The sensor means may bear laterally on the animal, preferably approximately above the udder against the animal's side. The sensor means may be provided with two curved spring-loaded arms, which extend in an upward direction and which are preferably capable of rotation around substantially horizontal axes, which axes are located under the milking parlour floor and extend in the longitudinal direction relative to the milking parlour.

The milking cluster, too, can be provided under the milking parlour floor. This renders it possible to obtain an efficient use of the available space. Thus, the shortest distance between the milking cluster and the udder can be obtained, because the milking cluster can be applied to the animal in the upward direction. Therefore, the parlour floor is provided with at least one coverable opening through which the milking cluster can perform, e.g. telescopically, up and down movement.

The means to force the animal in a predetermined longitudinal position comprises a buffer for keeping in a forward position or moving forward at least the upper end of a hindleg of the animal, the lower end of the hindleg being blocked in a forward direction. In this way the animal can be adjusted to a more advantageous position for efficient milking. The buffer may be fastened to the entrance door of the milking parlour, so that these means can be adjusted to the correct position by closing of the door.

For correcting the position or posture of the animal the parlour floor can be provided with means for moving a leg of an animal. Such means may comprise a hingeable milking parlour floor portion or a slidable milking parlour floor portion. The hingeable milking parlour floor portion may be constituted by a hingeable flap provided in or near the parlour floor and may be coupled to the slidable portion of the floor. Hydraulic means may be provided for moving the milking parlour floor portions. The means for moving a leg of an animal acts on the lower end of a hindleg of the animal and preferably simultaneously on both hindlegs. The presence of the means for moving a leg of an animal may be important on the one hand because the location of each leg of the animal influences its position, and on the other hand because a leg of the animal may be on a location which is disadvantageous for the milking operation.

Furthermore the parlour floor may be provided with means, preferably hingeable flaps in or near the parlour floor, preventing a forward movement of one or more legs of the animal. Specifically two flaps are provided, one flap being provided near the place where the forelegs of the animal may be present and one flap being arranged near the position where the hindlegs of the animal may be present. In this situation it is possible that the first-mentioned flap is in an upward position when the animal enters the milking parlour, thus forming a boundary for the area where the forelegs of the animal may be present. Once the animal has arrived in the milking parlour, the flap near the hindlegs can be adjusted from a substantially horizontal position to an upward position. The flaps may be of a hydraulically adjustable construction and can extend along the overall width of the milking parlour.

Additionally, the device may be provided with means, comprising guide rails above the animal, for preventing the animal from moving in the upward direction.

The device for milking animals, such as cows, can be accommodated in a loose housing or in the field or in other places where the animals can preferably move freely.

When a cow is to be milked, the cow can go to the milking parlour of its own accord or can be given a signal by means of the computer through the loudspeaker on the collar which instructs the cow to go to the milking parlour. The entrance door opens when the cow arrives there. The cow moves its head to the manger in which a dose of fodder is provided for the cow. The metered quantity of fodder can be influenced by the identification member provided on the collar of the cow.

The flap in front of the forelegs of the cow is in the upward position, so that the cow cannot advance too far.

The entrance door has closed in the meantime and portions of this door bear on the posterior of the cow, so that the cow is also not capable of moving rearwardly.

In front of the hindlegs a flap moves up around a hinge pin provided near the floor. Should a leg of the cow be standing on the flap, the leg slides to the rear, until it is located on the horizontal floor. This flap in front of the hindlegs of the cow prevents - when the flap is in the vertical position - a leg of the cow from moving forward. Consequently, the milking cluster cannot be kicked from the cow's udder. The vertical up-movement of the flaps may be effected with the aid of hydraulic cylinders.

In addition, the cow's udder is often located to an excessive extent between the cow's hindlegs, which may cause problems for the milking operation. To prevent this, a portion of the floor on which the cow's hindlegs are positioned, may, optionally hydraulically, be moved to the rear.

When the hydraulically operated flap is moved to an upward position, an opening is created in the floor through which a milking cluster and, optionally, a washing device can move up from below the floor level.

The milking cluster can be arranged such as to permit of lateral movement. Preferably, this capability of movement is coupled to two sensor arms between which the cow is positioned. So when the cow is slightly off-centre of the milking parlour, the milking cluster will be arranged laterally to the same degree, so that an appropriate coupling of the milking cluster to the udder is automatically effected. Preferably, the sensor arms are spring-loaded, so that cows of different thickness can be milked by the implement.

Bounding means, for example tubes, are arranged capable of adjustment over the cow, so that the cow cannot move up.

When the hindlegs of the cow have been moved to the rear, the washing device is automatically attached to the udder. After washing of the udder and, optionally, drying, the milking cluster is automatically moved upwards and attached to the udder.

The cow is then milked automatically.

After the milking operation has ended, the milking cluster withdraws to below floor level. The floor closes. The flaps move to a horizontal position. The exit door opens and the cow leaves the milking parlour.

In addition, the device preferably includes a milking parlour having a floor in which one or more sensors are provided for checking whether the cow is in the milking parlour in the correct position. It might, for example, be possible that a leg of the cow is trapped. Such measures are taken in the device that, if the cow is not present in the correct position, the milking operation does not start.

Members are preferably provided to move the cow to an appropriate position or location. As described in the foregoing, these members may, for example, be the movable floor and/or the hingeable flap.

For a better understanding of the invention, an embodiment of a device for milking animals will now be described, by way of example, with reference to the drawing.
Figure 1 is a plan view of the device;
Figure 2 is a side elevational view of the device, partly in cross-section;
Figure 3 is a cross-sectional view along the line III-III of Figure 2;
Figure 4 shows a set-up of the device;
Figure 5 shows a number of details of the device, shown in plan view and
Figure 6 shows details by means of a cross-sectional view along the line VI-VI of Figure 5.

The Figures are shown schematically, corresponding components having been given the same reference numerals.

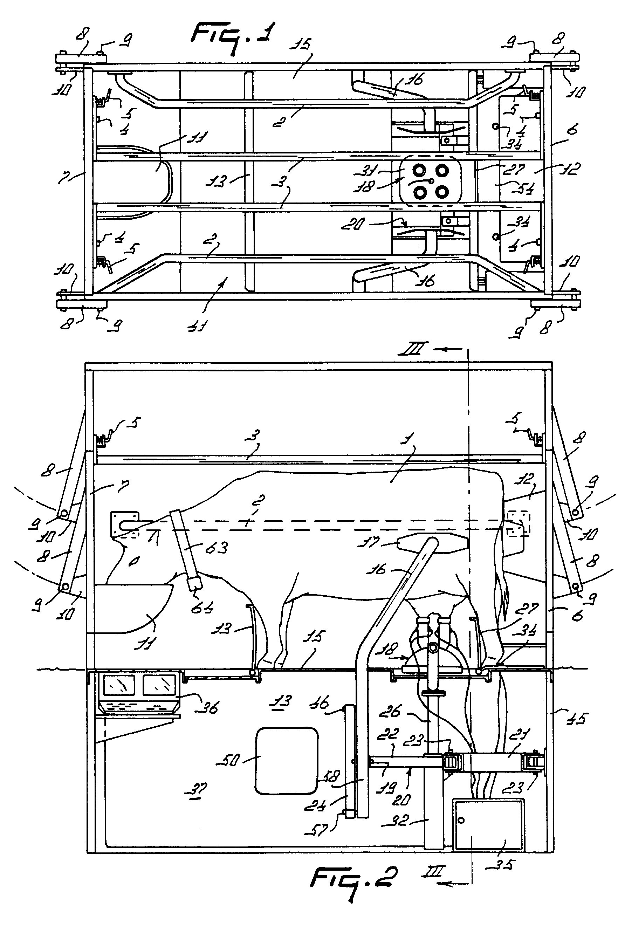

Figures 1, 2 and 3 show a milking parlour in which a cow 1 may be present. The milking parlour is provided on either side with guide rails 2 and with guide rails 3, which may extend over the cow. The lateral guide rails 2 are fastened to the milking parlour wall. The upper guide rails 3 are adjustable for height in that they can swivel around the hinge points 4 and can be locked in different positions by means of blocking devices.

In addition, the milking parlour has an entrance door 6 and an exit door 7. To open the doors, swivel arms 8 are provided which are connected capable of hinging to the frame or the wall of the device through hinge points 9 and also capable of swivelling to supports 10 fastened to the doors 6, 7. The doors 6 and 7 can be operated individually and automatically, for example hydraulically or pneumatically, through control means not further shown in the Figures 1, 2 and 3.

A manger 11 is fastened to the exit door 7, in which doses of fodder, for example concentrated fodder, can be applied through means not further shown.

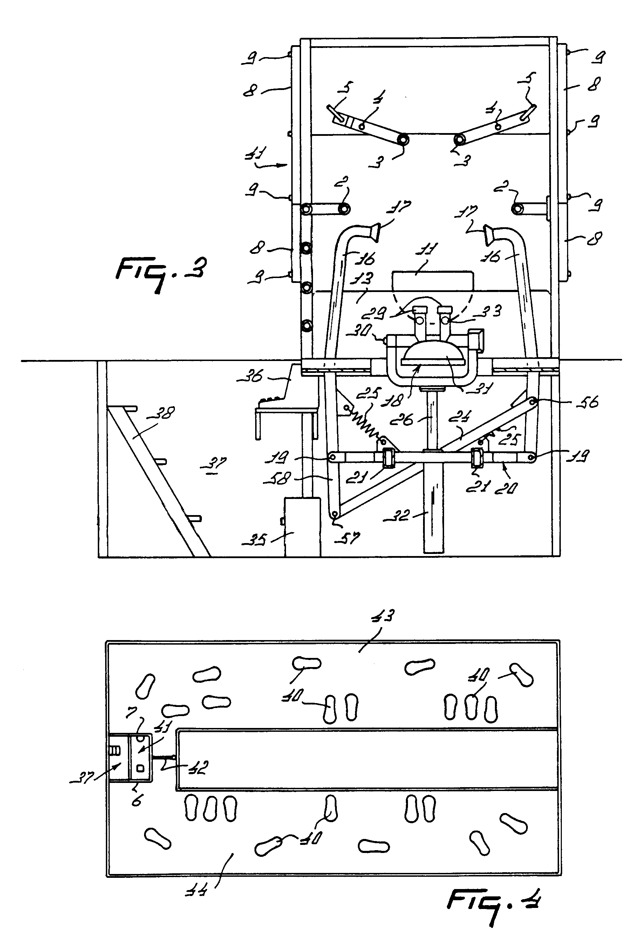

The entrance door 6 has a buffer 12, which - as is shown in Figure 2 - can bear against the posterior of the cow. Because of the presence of this buffer, the animal cannot move to the rear or the possibility to move to the rear can be limited. In this way the animal can be positioned in the longitudinal direction.

Figure 2 shows a flap 13, which is swivable around hinge pin 14 and is shown in its raised position. The flap 13 can be swivelled to a substantially horizontal position, the flap 13 then being flush with the floor 15 of the milking parlour. When the animal enters the milking parlour, flap 13 will be in the position shown, and the animal will move its forelegs up to or near the flap 13, so as to be able ot reach the manger 11.

Additionally, the device has two sensor members 16, both provided with a shoe 17, which can bear against the animal's side. The mutual distance between the shoes 17 can be varied, but by means of a mechanism still further to be described in the sequel, the milking cluster 18 will always be in a central position below the two shoes 17. To that end, the two sensor members 16 are provided, each capable of hinging around a horizontal shaft 19, to a frame 20, which frame 20 can be moved laterally relative to the milking parlour because of the fact that it is supported by two parallel beams 21, each beam 21 being connected by means of one end and capable of hinging around a vertical shaft 22 to the frame 20 and by means of its other end, capable of hinging around vertical shaft 23 to the frame of the device. Thus a parallelogram structure is obtained. The mutual motion of the sensor members 16 is coupled such that their motion can only proceed symmetrically relative to the frame 20. For that purpose a connecting rod 24 is provided, one end 56 of which is connected capable of hinging to one sensor member, more specifically remote from hinge point 19, and by means of its other end 57 this rod 24 is connected to an extension 58 of the other sensor member at substantially the same distance from hinge point 19. So as to pull the two sensor members 16 slightly towards each other, a tension spring 25 is provided. The support 26 for the milking cluster is also connected to the frame 20, so that it can also be moved laterally by swivelling of the beams 21.

The tension spring 25 moves the shoes 17 of the sensor members 16 to each other in such a way that the mutual distance between the shoes 17 is less than the width of an animal entering the milking parlour. As a result thereof, the shoes will bear on both sides against the animal, the frame 20 always being moved to a position straight under the animal, as a result of which the milking cluster support 26 will always be central under the animal. Even if the animal moves during milking in a lateral direction, the milking cluster will follow this movement.

The device can also include means for moving the sensor members 16 mutually from each other when the animal enters and/or leaves the milking parlour.

The device furthermore includes a flap 27, which is swivable around a horizontal hinge pin 28, which extends substantially in the lateral direction relative to the milking parlour. The flap 27 will be in its horizontal position when it forms part of the floor 15 of the milking parlour, when the animal enters the milking parlour. Thereafter the flap 27 can be swivelled in the vertical direction, thus preventing the hindlegs of the animal, which are then up against or near the flap 27, from being capable of forward movement. When one or both hindlegs of the animal would originally stand on the flap, this leg or both hindlegs will be compelled to move to the rear, which improves the accessibility of the udder. Because of the presence of guide rails 3 above the animal, the animal is prevented from trying to step over the flaps 13 or 27.

In Figure 1 four teat cups 29 of the milking cluster 18 are shown in plan view. As will be clear from the Figures 2 and 3, the teat cups 29 are connected such to the support 26 by means of the horizontal hinge pin 30 that the cups of the milking cluster can rotate through 180°, whereafter they face down, cleaning means, such as a bowl-shaped basin 31 also having been rotated through 180° so that this basin has its open side face upward. The bowl-shaped basin 31 may be used for washing and cleaning the udder.

The milking cluster 18 and the bowl-shaped basin 31 can move with their support 26 in the vertical direction, because the support 26 can move telescopically in the member 32 connected to the frame 20.

Figure 2 furthermore shows a number of sensors, more specifically sensors 33 on the teat cups 29, which sensors can detect whether the connection of the teat cup to the teat of the udder is effected correctly. Sensors 34 can detect whether the hindlegs of the animal are in a correct position.

In addition, a control unit denoted by reference numeral 35 and a microprocessor 36 are arranged below the milking parlour floor level.

As is shown in Figure 3, a control room 37 is also provided below the floor level of the milking parlour and a stair 38 is shown which gives access to the control room.

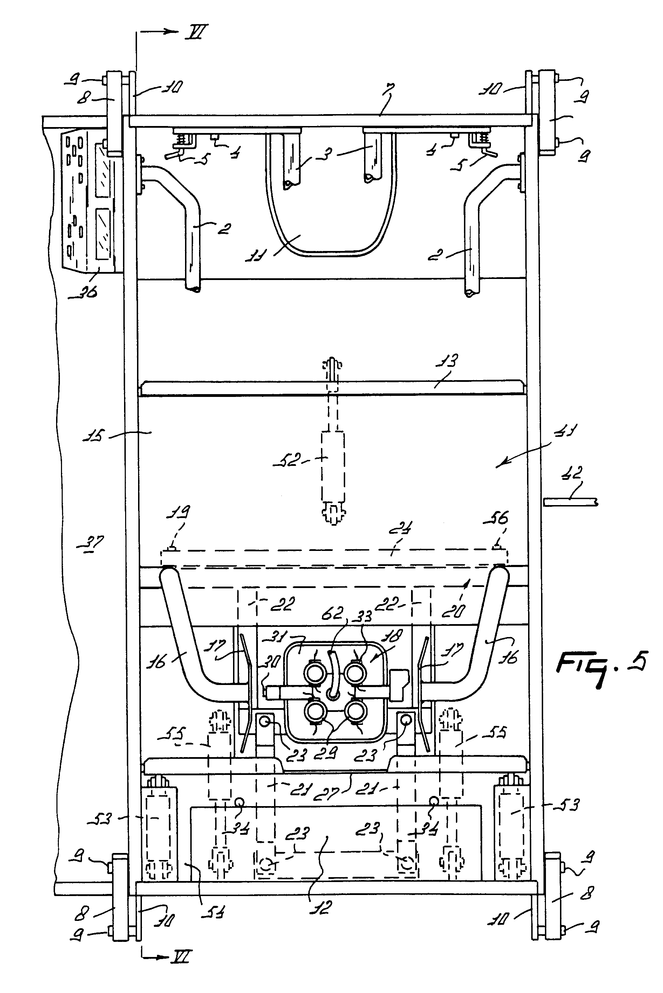

Figure 4 shows schematically a stable in which a number of animals 40 move freely. The milking parlour 41 is incorporated in the stable and furthermore a door 42 is present, so that the stable is divided into two portion 43 and 44. Door 42 is freely swivable in one direction, so that the animals 40 can move through this door from portion 44 to portion 43 of the stable, but not vice versa. The animals can only move from portion 43 to portion 44 of the stable through the milking parlour 41, which, for that purpose has an entrance door 6 and an exit door 7.

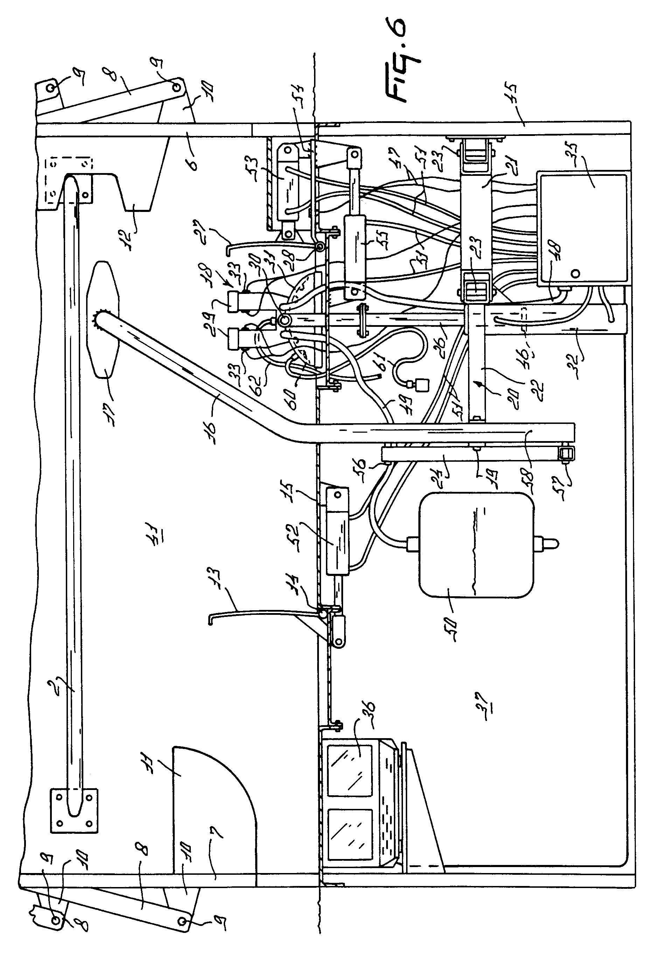

Figures 5 and 6 are cross-sectional views of a portion of the device for milking animals, which cross-sectional views show more details. The device includes guide rails 3 extending on both sides of the animal when the animal is in the milking parlour. In addition, in Figure 5 portions of guide rails 3 are shown, which guide rails may extend over the animal. The device furthermore has an entrance door 6 and an exit door 7, the entrance door 6 having a buffer 12 against which the posterior of the animal can bear, Door 7 is provided with a manger 11.

A frame 20 is connected in such a way to a wall 45 by means of bars 21 that the frame 22 is capable of moving substantially in the lateral direction. To that end, two bars 21 are provided with are mutually in parallel and are each connected by means of one end to the wall 45, capable of hinging around a vertical axis, and by means of their other ends through a vertical hinge pin to the frame 22, so that a parallelogram construction is obtained. The sensor members 16 are fastened to the frame 22 and the support 26 is fastened through member 32. Member 32 constitutes a cylinder in which a piston 46 connected to a support 26 can move with the object of moving the milking cluster 18 in the vertical direction.

Furthermore, the frame 22 supports two sensor members 16, which are both swivable, the connection being intercoupled by means of connecting rod 24. As has already been described in the foregoing, the sensor members 16 move the frame 22 such, that the milking cluster 18 is always in a central position under the two shoes 17 of sensor members 16. The milking cluster 18 which can move, by travelling in the vertical direction, to below the floor level of the milking parlour because a support 26 descends in element 32, has sensors 33 which can detect whether the teat cups 29 have been connected correctly to the teats of the udders. These sensors 33, as are also sensors 34 for detecting the position of the hindlegs of the animal, are connected by means of wires 47 to the control unit 35. By means of conduit 48, this control unit 35 is conncted to the milking cluster 18, for producing the vacuum for the milking operation. The milk can flow to storage container 50 through conduit 49.

In addition, control unit 35 provides for the motions of the different portions of the device. To that end, control unit 35 is connected through hydraulic conduits or air conduits 51 to a hydraulic or pneumatic cylinder 52 for operating flap 13 and to a hydraulic or pneumatic cylinder 53 for operating flap 27. Also the height adjustment of support 26 of milking cluster 18 may be effected hydraulically or pneumatically.

Additionally, the device includes a floor portion 54 which is capable of sliding in the longitudinal direction relative to the milking parlour. By means of hinge 28 this floor portion 54 is connected to flap 27 and can be moved by means of a pneumatic or hydraulic cylinder 55. By moving the floor portion 54 rearwardly, the hindlegs of the animal can be moved to the rear, so that the udder is accessible to an improved degree. In this situation, the buffer 12 can bear against the posterior of the animal.

As is shown in Figure 6, the milking cluster 18 can swivel around horizontal shaft 30, so that the bowl-shaped basin 31 is directed upwardly. In this position of basin 31, cleaning of the animal's udder can be effected, for which purpose spray nozzles 60 and a liquid fed-forward through conduit 61 can be sprayed against the udder. This liquid may be a disinfectant, a rinsing agent in the form of warm water or any other liquid suitable for washing, rinsing, disinfecting or otherwise cleaning the udder. The bowl-shaped basin 31 has in its centre a discharge conduit 62 through which the used-up liquid can be discharged and through which optionally warm air can be blown to the udder for drying it.

Figures 5 and 6 show, also schematically, a microprocessor computer 36 which can control the device. This control may relate to connecting the milking cluster to the udder, decoupling the milking cluster from the udder, rinsing, cleaning or disinfecting the udder, positioning of the animal, metering of fodder, etc. Then, the animal 1 may be provided with a collar 63 to which means 64 for identifying the animal are attached, so that using a sensor it can be detected which animal is present in the milking parlour, this information being used by the micro-processor 36 for controlling the device.

Further sensors may alternatively be provided, for example sensors for determining the temperature of the milk, which data may be important for controlling the device. The relevant data of each animal can be stored in the memory of the micro-processor 36 and are thus available in any combination for a person operating the device.

## Claims

1. A device for milking animals, such as cows, comprising a milking parlour, a milking machine with a milking cluster (18) and with a support (26) therefore, which support (26) is capable of lateral movement, positioning means (12, 13, 27, 54) to position an animal in the longitudinal direction in the milking parlour and sensor means (16) for determining the position of an animal in the lateral direction in the milking parlour, characterized in that the sensor means (16) are disposed on each side of the milking parlour and are arranged to determine said lateral position in contact with an animal in the milking parlour, said sensor means (16) further being coupled to the support (26) in such a manner that they maintain the milking cluster (18) central to parts of the sensor means (16) arranged to be in contact with an animal in the milking parlour.

2. A device as claimed in claim 1, characterized in that the sensor means (16) and the milking cluster (18) are connected, capable of swivelling, by means of a parallelogram construction.

3. A device as claimed in claim 2, characterized in that the parallelogram construction extends in a horizontal plane and is located under the milking parlour floor.

4. A device as claimed in any one of the preceding claims, characterized in that the sensor means (16) is capable to bear laterally on the animal, preferably approximately above the udder against the animal's side.

5. A device as claimed in any one of the preceding claims, characterized in that the sensor means (16) is provided with two curved spring-loaded arms, which extend in an upward direction and which are preferably capable of rotation around substantially horizontal axes (19), which axes (19) are located under the milking parlour floor and extend in the longitudinal direction relative to the milking parlour.

6. A device as claimed in any one of the preceding claims, characterized in that the milking cluster (18) is located under the milking parlour floor, which floor is provided with at least one coverable opening through which the milking cluster (18) can perform, e.g. telescopically, up and down movement.

7. A device as claimed in any one of the preceding claims, characterized in that the means to force the animal in a predetermined longitudinal position comprises a buffer (12) for keeping in a forward position or moving forward at least the upper end of a hindleg of the animal, the lower end of the hindleg being blocked in the forward direction.

8. A device as claimed in any one of the preceding claims, characterized in that the parlour floor is provided with means (27, 54) for moving a leg of an animal.

9. A device as claimed in claim 8, characterized in that the means for moving a leg of an animal comprises a slidable milking parlour floor portion (54).

10. A device as claimed in claim 8, characterized in that the means for moving a leg of an animal comprises a hingeable milking parlour floor portion (27).

11. A device as claimed in claim 10, characterized in that the hingeable milking parlour floor portion is constituted by a hingeable flap (27) provided in or near the parlour floor.

12. A device as claimed in one of the claims 9 to 11, characterized in that the means (27, 54) for moving a leg of an animal is hydraulically operable and acts on the lower end of at least one hindleg of the animal.

13. A device as claimed in any one of the preceding claims, characterized in that the parlour floor is provided with means (13, 27) preventing a forward movement of a leg of an animal.

14. A device as claimed in claim 13, characterized in that the means preventing a forward movement of a leg of an animal comprises hingeable flaps (13, 27) in or near the parlour floor.

15. A device as claimed in any one of the preceding claims, characterized in that means (3, 4, 5) are provided for preventing the animal from moving in upward direction.

16. A device as claimed in claim 15, characterized in that the means for preventing the animal from moving in the upward direction comprises guide rails (3) above the animal.

## Patentansprüche

1. Vorrichtung zum Melken von Tieren, wie z. B. Kühen, die einen Melkstand, eine Melkmaschine mit einem Melkgeschirr (18) und einem seitwärts verschiebbaren Halter (26) für das Melkgeschirr, eine Positioniervorrichtung (12, 13, 27, 54) zum Positionieren eines Tieres in Längsrichtung in dem Melkstand und Sensoren (16) zum Ermitteln der Position eines Tieres in Seitwärtsrichtung in dem Melkstand aufweist, dadurch gekennzeichnet, daß die Sensoren (16) auf beiden Seiten des Melkstandes angeordnet und dazu ausgebildet sind, die Seitwärtsposition durch Kontakt mit einem in dem Melkstand befindlichen Tier zu ermitteln, wobei die Sensoren (16) ferner mit dem Halter (26) derart verbunden sind, daß sie das Melkgeschirr (18) relativ zu Teilen der Sensoren (16), die in Kontakt mit einem in dem Melkstand befindlichen Tier stehen, in einer mittigen Lage halten.

2. Vorrichtung nach Anspruch 1,
dadurch gekennzeichnet, daß die Sensoren (16) und das Melkgeschirr (18) mittels einer Parallelogramm-Konstruktion schwenkbar verbunden sind.

3. Vorrichtung nach Anspruch 2,
dadurch gekennzeichnet, daß die Parallelogramm-Konstruktion in einer horizontalen Ebene unter dem Melkstandboden angeordnet ist.

4. Vorrichtung nach einem der vorhergehenden Ansprüche,
dadurch gekennzeichnet, daß die Sensoren (16) seitlich an dem Tier zur Anlage zu bringen sind, vorzugsweise etwa oberhalb des Euters an der Seite des Tieres.

5. Vorrichtung nach einem der vorhergehenden Ansprüche,
dadurch gekennzeichnet, daß der Sensor (16) zwei gekrümmte federbelastete Arme aufweist, die nach oben gerichtet und vorzugsweise um im wesentlichen horizontale Achsen (19) drehbar sind, die unter dem Melkstandboden angeordnet sind und sich relativ zu dem Melkstand in Längsrichtung erstrecken.

6. Vorrichtung nach einem der vorhergehenden Ansprüche,
dadurch gekennzeichnet, daß das Melkgeschirr (18) unter dem Melkstandboden angeordnet ist, der mindestens eine abdeckbare Öffnung aufweist, durch welche hindurch von dem Melkgeschirr (18) eine z. B. teleskopartige Höhenbewegung durchzuführen ist.

7. Vorrichtung nach einem der vorhergehenden Ansprüche,
dadurch gekennzeichnet, daß die Vorrichtung zum Befördern des Tieres in eine vorgegebene Position in Längsrichtung einen Puffer (12) aufweist, um zumindest das obere Ende eines Hinterbeines des Tieres in einer Vorwärtsstellung zu halten oder in diese zu bewegen, wobei das untere Ende des Hinterbeines in Vorwärtsrichtung blockiert ist.

8. Vorrichtung nach einem der vorhergehenden Ansprüche,
dadurch gekennzeichnet, daß der Melkstandboden eine Vorrichtung (27, 54) zum Bewegen eines Beines eines Tieres aufweist.

9. Vorrichtung nach Anspruch 8,
dadurch gekennzeichnet, daß die Vorrichtung zum Bewegen eines Beines eines Tieres einen verschiebbaren Teil (54) des Melkstandbodens aufweist.

10. Vorrichtung nach Anspruch 8,
dadurch gekennzeichnet, daß die Vorrichtung zum Bewegen eines Beines eines Tieres einen schwenkbaren Teil (27) des Melkstandbodens aufweist.

11. Vorrichtung nach Anspruch 10,
dadurch gekennzeichnet, daß der schwenkbare Teil des Melkstandbodens durch eine schwenkbare Klappe (27) gebildet ist, die in oder nahe dem Melkstandboden angeordnet ist.

12. Vorrichtung nach einem der Ansprüche 9 bis 11,
dadurch gekennzeichnet, daß die Vorrichtung (27, 54) zum Bewegen eines Beines eines Tieres hydraulisch zu betätigen ist und auf das untere Ende mindestens eines Hinterbeines des Tieres wirkt.

13. Vorrichtung nach einem der vorhergehenden Ansprüche,
dadurch gekennzeichnet, daß der Melkstandboden eine Vorrichtung (13, 27) aufweist, die eine Vorwärtsbewegung eines Beines eines Tieres verhindert.

14. Vorrichtung nach Anspruch 13,
dadurch gekennzeichnet, daß die Vorrichtung zum Verhindern einer Vorwärtsbewegung eines Beines eines Tieres schwenkbare Klappen (13, 27) aufweist, die in oder nahe dem Melkstandboden angeordnet sind.

15. Vorrichtung nach einem der vorhergehenden Ansprüche,
dadurch gekennzeichnet, daß eine Vorrichtung (3, 4, 5) vorgesehen ist, um eine Bewegung des Tieres nach oben zu verhindern.

16. Vorrichtung nach Anspruch 15,
dadurch gekennzeichnet, daß die Vorrichtung zum Verhindern einer Bewegung des Tieres nach oben über dem Tier angeordnete Führungsschienen (3) aufweist.

## Revendications

1. Dispositif pour traire des animaux, tels que des vaches, comprenant une stalle de traite, une machine à traire avec un groupe de traite (18) et un support (26) pour celui-ci, lequel support (26) est capable de mouvement latéral, des moyens de positionnement (12, 13, 27, 54) pour positionner un animal dans le sens longitudinal dans la stalle de traite et des moyens détecteurs (16) pour déterminer la position d'un animal dans le sens latéral dans la stalle de traite,
**caractérisé** en ce que les moyens détecteurs (16) sont disposés sur chaque côté de la stalle de traite et sont agencés pour déterminer ladite position latérale en contact avec un animal dans la stalle de traite, lesdits moyens détecteurs (16) étant en outre reliés au support (26) de telle manière qu'ils maintiennent le groupe de traite (18) central par rapport à des parties des moyens détecteurs (16) agencées pour être en contact avec un animal dans la stalle de traite.

2. Dispositif selon la revendication 1, caractérisé en ce que les moyens détecteurs (16) et le groupe de traite (18) sont reliés, en étant capables de pivoter, au moyen d'une construction en parallèlogramme.

3. Dispositif selon la revendication 2, caractérisé en ce que la construction en parallèlogramme s'étend dans un plan horizontal et est située sous le plancher de la stalle de traite.

4. Dispositif selon l'une quelconque des revendications précédentes, caractérisé en ce que le moyen détecteur (16) est capable de porter latéralement sur l'animal, de préférence approximativement au dessus du pis, contre le flanc de l'animal.

5. Dispositif selon l'une quelconque des revendications précédentes, caractérisé en ce que le moyen détecteur (16) est muni de deux bras incurvés, sollicités par des ressorts, qui s'étendent vers le haut et qui sont de préférence capables de rotation autour d'axes (19) sensiblement horizontaux, lesquels axes (19) sont situés sous le plancher de la stalle de traite et s'étendent dans le sens longitudinal par rapport à la stalle de traite.

6. Dispositif selon l'une quelconque des revendications précédentes, caractérisé en ce que le groupe de traite (18) est situé sous le plancher de la stalle de traite, lequel plancher est pourvu d'au moins une ouverture pouvant être recouverte, à travers laquelle le groupe de traite (18) peut effectuer, par exemple de manière télescopique, des mouvements de montée et de descente.

7. Dispositif selon l'une quelconque des revendications précédentes, caractérisé en ce que le moyen pour forcer l'animal dans une position longitudinale prédéterminée comprend un tampon (12) pour maintenir en position avancée ou pour faire avancer au moins l'extrémité supérieure d'une patte postérieure de l'animal, l'extrémité inférieure de la patte postérieure étant bloquée en direction de l'avant.

8. Dispositif selon l'une quelconque des revendications précédentes, caractérisé en ce que le plancher de la stalle est pourvu de moyens (27, 54) pour faire mouvoir une patte d'un animal.

9. Dispositif selon la revendication 8, caractérisé en ce que le moyen pour faire mouvoir une patte d'un animal comprend une partie coulissante (54) du plancher de la stalle de traite.

10. Dispositif selon la revendication 8, caractérisé en ce que le moyen pour faire mouvoir une patte d'un animal comprend une partie pivotante (27) du plancher de la stalle de traite.

11. Dispositif selon la revendication 10, caractérisé en ce que la partie pivotante du plancher de la stalle de traite est constituée par un volet pivotant (27) prévu dans le plancher de la stalle ou près de ce plancher.

12. Dispositif selon l'une des revendications 9 à 11, caractérisé en ce que le moyen (27, 54) pour faire mouvoir une patte d'un animal peut être actionné par voie hydraulique et agit sur l'extrémité inférieure d'au moins une patte postérieure de l'animal.

13. Dispositif selon l'une quelconque des revendications précédentes, caractérisé en ce que le plancher de la stalle est muni de moyens (13, 27) empêchant un mouvement d'une patte d'un animal vers l'avant.

14. Dispositif selon la revendication 13, caractérisé en ce que le moyen empêchant un mouvement d'une patte d'un animal vers l'avant comprend des volets pivotants (13, 27) dans le plancher de la stalle ou près de ce plancher.

15. Dispositif selon l'une quelconque des revendications précédentes, caractérisé en ce que des moyens (3, 4, 5) sont prévus pour empêcher l'animal de se mouvoir en direction verticale.

16. Dispositif selon la revendication 15, caractérisé en ce que le moyen pour empêcher l'animal de se mouvoir en direction verticale comprend des rails de guidage (3) au dessus de l'animal.
